# NEUE EUROPÄISCHE PATENTSCHRIFT

(11) **EP 0 760 763 B2**
(45) Veröffentlichungstag und Bekanntmachung des Hinweises auf die Entscheidung über den Einspruch: **30.05.2007**
(45) Hinweis auf die Patenterteilung: 03.01.2001
(21) Anmeldenummer: 96903912.2
(22) Anmeldetag: 28.02.1996
(51) Int. Cl.: B60T 8/00

(54) **BREMSSYSTEM FÜR EIN KRAFTFAHRZEUG**
BRAKING SYSTEM FOR A MOTOR VEHICLE
SYSTEME DE FREINAGE POUR VEHICULE AUTOMOBILE

(30) Priorität: 27.03.1995 DE 19511161
(43) Veröffentlichungstag der Anmeldung: 12.03.1997
(73) Patentinhaber: ROBERT BOSCH GMBH, 70442 Stuttgart (DE)
(72) Erfinder: KORNHAAS, Robert, D-71701 Schwieberdingen (DE); GOTTWICK, Ulrich, D-70192 Stuttgart (DE)
(86) Internationale Anmeldenummer: PCT/DE1996/000333
(87) Internationale Veröffentlichungsnummer: WO 1996/030243

(56) Entgegenhaltungen:
- EP-A- 0 175 843
- DE-A- 4 112 388
- DE-A- 4 208 581
- DE-A- 4 226 646
- DE-A- 4 335 769
- FR-A- 2 143 293
- GB-A- 2 135 413
- GB-A- 2 158 533
- "WABCO - Antiblockier-System für Nutzfahrzeuge, 11/90

## Beschreibung

### Stand der Technik

Die Erfindung betrifft ein Bremssystem für ein Kraftfahrzeug gemäß dem Anspruch 1.

Heutige Bremssysteme für Kraftfahrzeuge umfassen neben der herkömmlichen hydraulischen, pneumatischen Bremsanlage, elektronische Zusatzfunktionen wie Antiblockierschutz (ABS) und/oder elektronische Bremskraftverteilung (EBV) zwischen Vorder- und Hinterachse. Diese Zusatzfunktionen unterstützen den Fahrer beim Bremsvorgang und verbessern die Stabilität und Lenkfähigkeit des Fahrzeugs in Bremssituationen. Aus Sicherheitsgründen sind Maßnahmen erforderlich, welche die Funktionsfähigkeit der die Zusatzfunktionen ausführenden elektronischen Steuereinheit sowie der mechanischen und elektrischen Komponenten überprüfen.

Aus dem SAE-Paper 890870 "Electronic Control Unit of the Sumitomo Electronic Antilock System" ist beispielsweise für eine hydraulische Bremsanlage bekannt, neben der elektronischen Steuereinheit selbst die Funktionsfähigkeit des Abschaltpfades im Fehlerfall, insbesondere des Ventilrelais, die Funktionsfähigkeit der Drehzahlfühler, die Funktionsfähigkeit der Drucksteuerventile und die Funktionsfähigkeit der Rückförderpumpe zu überprüfen. Bei Fehlererkennung wird neben der Ansteuerung einer Warnlampe zur Information des Fahrers der Antiblockierschutzregler spätestens nach Beendigung eines laufenden Bremsvorgangs abgeschaltet.

Aus der WO 94/12377 A1 ist eine Bremsanlage mit ABS und EBV bekannt, bei welcher bei einem erkannten Fehlerzustand die Spannungsversorgung der einzelnen Regelventile über ein Relais abgeschaltet werden. Dabei wird sowohl der ABS- als auch der EBV-Regler abgeschaltet. Eine überbremste Hinterachse wird dadurch verhindet, daß die Ventile der Hinterradbremsen über separate Schaltkreise weiterhin mit Strom versorgt werden und der Druck in den Hinterachsenbremsen begrenzt wird.

Aus der DE-OS 41 12 388 (US-Patent 5,281,012) ist ein Regler zur Bremskraftverteilung zwischen Vorder- und Hinterachse des Kraftfahrzeugs bekannt, bei welchem der Hinterachsbremsdruck derart eingestellt wird, daß eine vorgegebene Differenz zwischen der Drehzahl des langsamsten Hinterrads und des schnellsten Vorderrads nicht unterschritten wird. Dadurch wird eine Überbremsung der Hinterachse im Teilbremsbreich vermieden. Zusätzlich zum Bremskraftverteilungsregler ist ein Antiblockierschutzregler vorgesehen. Maßnahmen im Fehlerfall elektrischer und mechanischer Komponenten werden nicht angegeben.

Durch die eingangs genannte vorgesehene Abschaltung der Reglerfunktion des ABS- und EBV-Reglers in den meisten Fehlerfällen können bei Bremsvorgängen ungewollte Situation auftreten, da ohne Regelfunktion große Schlupfwerte an den Rädern auftreten können. Bei großen Schlupfwerten können die Räder keine Seitenführungskräfte mehr übertragen. Dadurch geht die Lenkfähigkeit und die Stabilität des Fahrzeugs während dieser Phasen hohen Schlupfes verloren. Außerdem können blockierende Räder durch den starken Abrieb während des Bremsvorgangs nachhaltig beschädigt werden.

Aus der EP-A 175 843 ist ein Bremssystem für ein Kraftfahrzeug mit wenigstens einer elektronischen Steuereinheit, die wenigstens einen Antiblockierregler sowie eine Fehlerermittlungseinheit umfaßt bekannt, wobei nach Maßgabe des erkannten Fehlerzustands eine Deaktivierung oder eine eingeschränkte Fortführung des Antiblockierreglers stattfindet. Eine teilweise Deaktivierung erfolgt, wenn die Spannungsversorgung eine Schwelle unterschreitet, eine vollständige Deaktivierung erfolgt, wenn die Spannungsversorgung eine zweite, kleinere Schwelle unterschreitet, oder wenn die interne Spannung einen Schwellenwert unterschreitet.

Die DE 42 08 581 A1 beschreibt eine Bremsanlage mit Bremskraftverteilungsregler und ABS. Der Bremskraftverteilungsregler bleibt aktiv, wenn der Vorderachsbremskreis ausgefallen ist. Fällt der Hinterachsbremsbereich aus, wird der Regler abgeschaltet. Es werden ausschließlich Fehler im hydraulischen System betrachtet.

Maßnahmen, die ein die Verfügbarkeit optimierendes Verhalten eines Bremskraftverteilungsreglers beschreiben, werden nicht angegeben.

Es ist daher Aufgabe der Erfindung, Maßnahmen anzugeben, mit denen im Fehlerfall ein Bremskraftverteilungsregler optimal betrieben werden.

Dies wird durch die Merkmale erreicht des Anspruchs 1.

### Vorteile der Erfindung

Die erfindungsgemäße Vorgehensweise erhöht die Verfügbarkeit der Bremsverteilungsregelung.

Besonders vorteilhaft ist, daß bei nahezu allen Fehlern außerhalb der Steuereinheit der Bremskraftverteilungsregler aktiv bleibt, so daß auch in diesem Betriebszustand eine Überbremsung der Hinterachse vermieden wird und die Stabilität des Fahrzeugs beim Bremsvorgang gewährleistet wird.

Dadurch kann in vorteilhafter Weise bei Fahrzeugen mit einer hydraulischen Bremsanlage auf hydraulische Komponenten, wie Druckminderer, und/oder auf Maßnahmen zur zusätzlichen Spannungsversorgung der Hinterachsbremsventile im Fehlerfall vollständig verzichtet werden.

Besondere Vorteile zeigt die erfindungsgemäße Vorgehensweise bei Fehlern der Geschwindigkeitssensoren an einem Hinterrad oder an einem Vorderrad, bei Fehlern an den Stellgliedern, falls diese zu einem Verlust der Bremskraft an einer oder zwei Hinterradbremsen oder zu einem ungeminderten Bremskraftaufbau an einer Vorderachsbremse führen, bei Fehlern an der Rückförderpumpe, bei Fehlern in Abschaltpfaden wie z.B. einem klemmenden Ventilrelais oder bei Unterspannung im Bordnetz.

Weitere Vorteile ergeben sich aus der nachfolgenden Beschreibung von Ausführungsbeispielen sowie aus den abhängigen Ansprüchen.

### Zeichnung

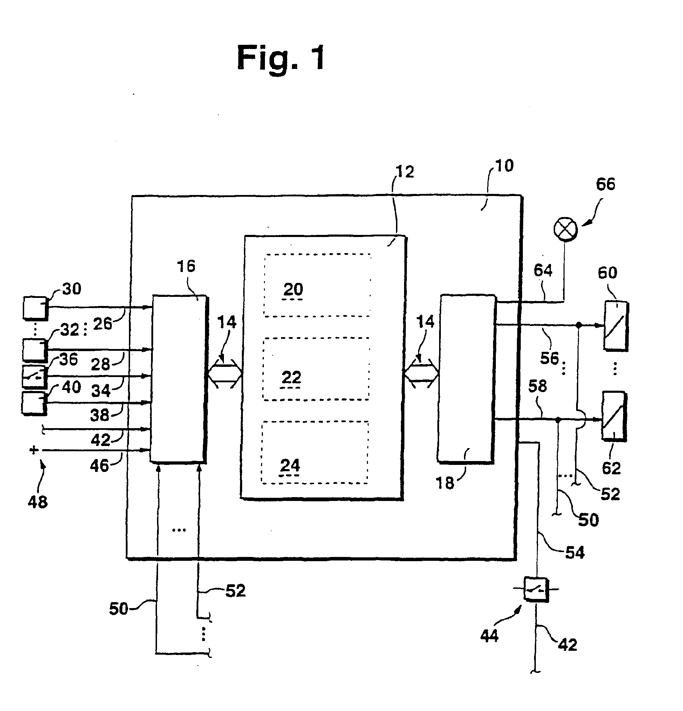

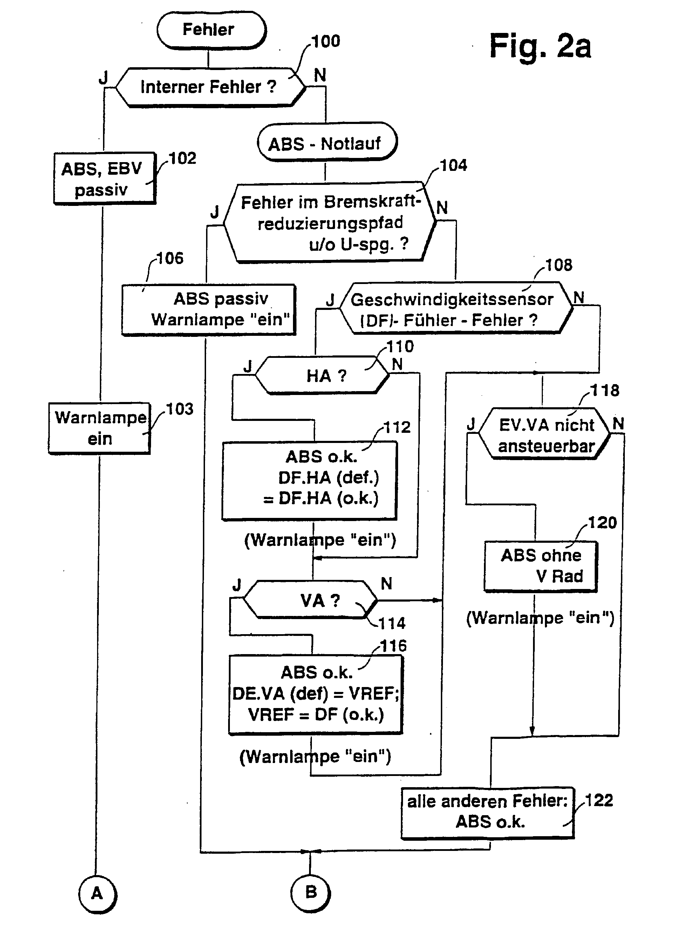

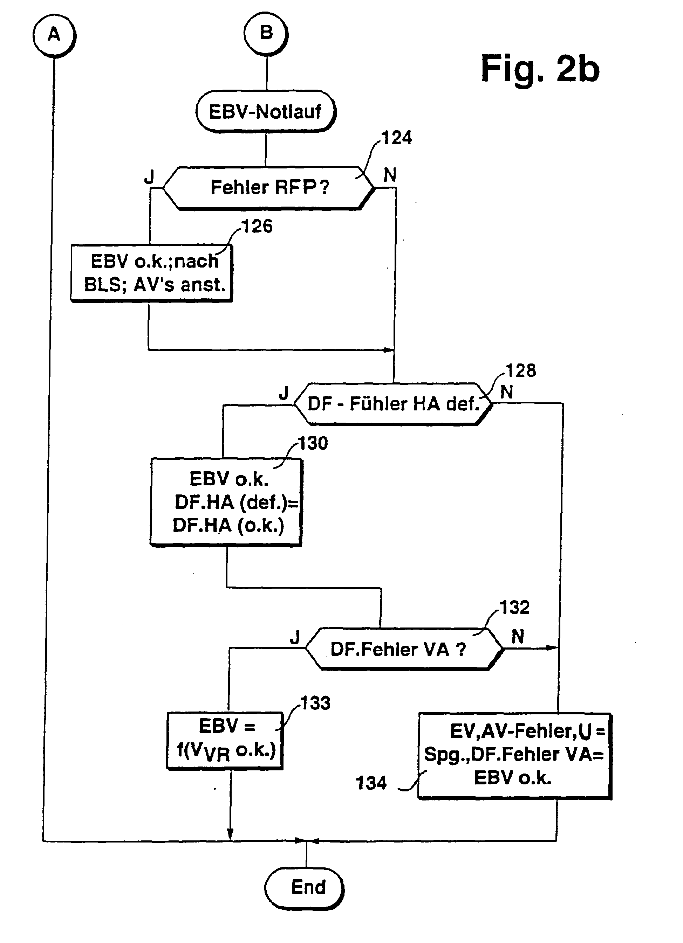

Die Erfindung wird nachstehend anhand der in der Zeichnung dargestellten Ausführungsformen näher erläutert. Dabei zeigt Figur 1 ein Übersichtsblockschaltbild des Bremssystems, während Figur 2 ein Flußdiagramm zeigt, welches ein Programm bezüglich der Entscheidung über die Durchführung der ABS- und EBV-Regelung skizziert.

### Beschreibung von Ausführungsbeispielen

Figur 1 zeigt ein Übersichtsblockschaltbild eines Bremssystems, bei welchem die erfindungsgemäße Vorgehensweise zum Einsatz kommt. Dabei ist mit 10 eine Steuereinheit dargestellt, welche aus wenigstens einem Mikrocomputer 12 aufgebaut ist. Dieser ist über ein Bussystem 14 mit einem Eingangs- 16 und einem Ausgangsbaustein 18 zum Daten- und Informationsaustausch verknüpft. Der Mikrocomputer 12 enthält in einem bevorzugten Ausführungsbeispiel einen Antiblockierschutzregler 20, einen Bremskraftverteilungsregler 22 sowie eine Fehlerermittlungseinheit 24. Die prinzipielle Funktionsweise dieser Regler bzw. der Fehlerermittlungseinheit ist aus dem eingangs genannten Stand der Technik bekannt.

In anderen vorteilhaften Ausführungsbeispielen umfaßt der Mikrocomputer 12 lediglich einen Antiblockierschutzregler und die Fehlerermittlungseinheit 24 oder lediglich den Bremskraftverteilungsregler 22 samt Fehlerermittlungseinheit 24.

Dem Eingangsbaustein 16 werden Eingangsleitungen 26 bis 28 von Drehzahlfühlern 30 bis 32 der Vorder- und Hinterachse des Fahrzeugs, eine Eingangsleitung 34 von einem Bremspedalschalter 36, eine Eingangsleitung 38 von einer Rückförderpumpe 40 der Bremsanlage und eine Leitung 42 vom Ventilrelais 44 zugeführt. Über die Leitungen 38 und 42 werden zur Überwachung geeignete Potential der entspechenden Komponenten oder Fehlerinformationen zugeführt. Eine Eingangsleitung 46 verbindet den Eingangsbaustein 16 mit einer Spannungsversorgung 48. Ferner werden diesem Leitungen 50 bis 52 zugeführt, welche die zur Überwachung der Ein- und Auslaßventile notwendigen Signalgrößen herbeiführen. Vom Ausgangsbaustein 18 der Steuereinheit 10 führt eine erste Ausgangsleitung 54 zum Ventilrelais 44, Ausgangsleitungen 56 bis 58 zu den Stellgliedern 60 bis 62 der einzelnen Radbremsen sowie mindestens eine weitere Ausgangsleitung 64 zu mindestens einer Warnlampe 66.

Im Normalbetrieb des Bremssystems löst der Antiblockierschutzregler bei Blockierneigung wenigstens eines der Räder die Bremse durch definiertes Ansteuern der zugeordneten Stellglieder. Bei hydraulischen oder pneumatischen Bremsanlagen sind unter den Stellgliedern z.B. Ein- und Auslaßventile zu verstehen. Die Blockierneigung wird dabei im bevorzugten Ausführungsbeispiel anhand der Abweichung der Drehzahl des betreffenden Rades von einer aus allen Raddrehzahlen gebildeten Referenzgeschwindigkeit erkannt. Bevor dieser sogenannte ABS-Fall eintritt, wird durch den Bremskraftverteilungsregler gewährleistet, daß die Hinterachsbremse nicht überbremst, das heißt die Räder der Hinterachse nicht vor den Rädern der Vorderachse blockieren. Dies erfolgt im bevorzugten Ausführungsbeispiel gemäß dem eingangs genannten Stand der Technik. Danach wird durch Ansteuern von Stellgliedern der entsprechenden Hinterachsradbremsen die Hinterachsbremskraft so eingestellt, daß das langsamste Hinterrad um einen vorgegebenen Differenzbetrag langsamer läuft als das schnellste Vorderrad. Auf diese Weise wird vermieden, daß die Hinterräder in einen Betriebsbereich geraten, in welchem sie zu blockieren neigen. Es wird demnach eine Begrenzung der Hinterradbremskraft durchgeführt, welche bereits im Teilbremsbereich zu einer Abweichung von der durch die Bremsanlage vorgegebenen Bremskraftverteilung zwischen Vorder- und Hinterachse im Sinne einer Verhinderung der Blockierneigung der Hinterachse darstellt.

Die Fehlerermittlungseinheit überprüft die Funktionsweise des Mikrocomputers sowie der weiteren Bestandteile der Steuereinheit 10 und ermittelt die Funktionsfähigkeit der externen Komponenten, insbesondere der Drehzahlfühler 30 bis 32, des Bremslichtschalters 36, des Ventilrelais 44, der Rückförderpumpe 40 und der Stellglieder 60 bis 62. Diese Fehlerüberwachungsmaßnahmen werden im bevorzugten Ausführungsbeispiel nach bekannten Methoden durchgeführt. Wird ein Fehlerfall erkannt, so steuert der Mikrocomputer 12 zur Fahrerinformation die Warnlampe 66 an. Ferner werden, wie nachfolgend beschrieben, der Antiblockierschutzregler und/oder der Bremskraftverteilungsregler deaktiviert und auf eine konventionelle Bremsung umgeschaltet, teilweise deaktiviert oder in ihrer Funktion aufrechterhalten. Dies gilt auch für den Fall der Unterspannung im Bordnetz. Diese wird von der Fehlerermittlungseinheit 24 durch Vergleich der über die Leitung 26 zugeführten Bordnetzspannung mit vorgegebenen Grenzwerten durchgeführt. Eine Unterspannung wird erkannt, wenn die Versorgungsspannung bei einem Normalwert von 12 Volt in einen Bereich kleiner als 10 und größer als 5 Volt abfällt. Unterhalb 5 Volt wird auf einen Ausfall der Spannungsversorgung geschlossen.

Die Fehlerermittlungseinheit lokalisiert den aufgetretenen Fehler und entscheidet dann gemäß der erfindungsgemäßen Vorgehensweise, welche der Regelfunktionen auf welche Weise trotz des Fehlers weiterhin durchgeführt wird. Dadurch wird ein vollständiges Abschalten des Antiblockierschutzreglers und des Bremskraftverteilungsreglers im Fehlerfall vermieden, die Verfügbarkeit der Regelung erhöht und die Betriebssicherheit des Fahrzeugs verbessert. Dabei stehen dem Fahrer auch in den meisten Fehlerfällen die vorteilhaften Wirkungen der Regelfunktionen zur Verfügung, auch wenn im einen oder anderen Fall geringe Funktionseinbußen und/oder Komforteinbußen hinzunehmen sind.

In einem bevorzugten Ausführungsbeispiel wird bei einem Drehzahlfühlerfehler an einem Hinterrad die Auswertung dieses Signal unterdrückt und das Signal des Drehzahlfühlers am zweiten Hinterrad, welcher funktionsfähig ist, zur Antiblockierschutz- und Bremskraftverteilungsregelung ausgewertet. Dazu wird in der Geschwindigkeitsaufbereitung das fehlerhafte Signal durch das fehlerfreie Signal überschrieben. Der Verlust von Information kann zwar zu einer Verschlechterung der Regelgüte führen, die Verfügbarkeit der Regler ist jedoch gewährleistet.

Bei einem Drehzahlfühlerfehler an einem Vorderrad bleibt der Antiblockierschutzregler im Rahmen eines Notlaufes aktiv, in dem für das entsprechende Vorderrad die abgeschätzte Fahrzeuggeschwindigkeit angenommen wird und die Drehzahlinformation dieses Vorderrads bei der Bildung der Referenzgeschwindigkeit ausgeklammert wird.

Bei Fehlern in den Stellgliedern an der Hinterachse, die zu einem Verlust der Bremswirkung einer Hinterachsbremse führen, wird der Bremskraftverteilungsregler und der Antiblockierschutzregler unverändert weitergeführt. Ein derartiger Fehler tritt dann beispielsweise dann auf, wenn bei hydraulischen oder pneumatischen Bremsanlagen das entsprechende Einlaßventil infolge eines Kurzschlusses dauernd bestromt wird und somit die Druckeinsteuerung in die Hinterradbremse sperrt. Der Vorteil der Maßnahme liegt darin, daß bei einer Weiterführung des Reglers gegenüber der Abschaltung ein Gewinn an Seitenführung verbleibt, obwohl die Bremsleistung unbedeutend verschlechtert wird.

Treten Fehler im Bereich der Stellglieder einer Vorderachsbremse auf, welche einen ungeminderten Bremskraftaufbau an dieser Bremse zur Folge haben, hat es sich als vorteilhaft erwiesen, den Antiblockierschutzregler unter Ausschluß dieser Vorderradbremse und den Bremskraftverteilungsregler unverändert weiterzuführen. Derartige Fehler treten beispielsweise auf, wenn bei hydraulischen oder pneumatischen Bremsanlagen das Einlaßventil infolge von Leitungsabrissen oder Kurzschlüssen nicht mehr angesteuert werden kann und somit der Fahrer ungehindert Druck in die Vorderradbremse einsteuern kann.

Bei Fahrzeugen mit einer geschlossenen hydraulischen Bremsanlage ist auch ein Fehler an der Rückförderpumpe möglich. Bei einem derartigen Fehler ist der Antiblockierschutzregler aus Sicherheitsgründen abzuschalten. Eine fehlerhafte Rückförderpumpe kann den beim Druckabbau aus den jeweiligen Radbremsen während der ABS-Regelung in die Speicherkammer entleerten Druck nicht mehr abpumpen. Die Folge könnte somit eine nicht mehr abbaubare Bremswirkung an den Radbremsen sein. Da eine Speicherkammerentleerung nicht mehr gewährleistet ist, muß also in diesem Fehlerfall der Antiblockierschutzregler abgeschaltet werden. Im Gegensatz dazu kann der Bremskraftverteilungsregler weiterbetrieben werden. Da zur Bremskraftverteilung im wesentlichen eine Begrenzung des Hinterradbremsdrucks durch Sperrung der Einlaßventile durchgeführt wird, kann diese Funktion auch bei Ausfall der Rückförderpumpe durchgeführt werden. Dabei werden auch Druckabbauansteuerungen an den Hinterradbremsen weiter durchgeführt. Am Ende der Regelung, wenn das Bremspedal nicht betätigt ist, wird dann das entsprechende Auslaßventil kurzfristig geöffnet und auf diese Weise der entströmende Druck im Bremskreis zurückgeführt.

Aufgrund des Vorstehenden ist klar, daß bei hydraulischen oder pneumatischen Bremsanlagen ein Weiterbetrieb des Bremskraftverteilungsreglers im Gegensatz zum Antiblockierschutzregler auch bei allen Auslaßventilfehlern vorteilhaft ist. Da zur Bremskraftverteilung im wesentlichen der vom Fahrer vorgegebene Vordruck durch Ansteuern der Einlaßventile begrenzt wird, spielt eine Nichtansteuerbarkeit oder eine ständige Ansteuerung der Auslaßventile in Bezug auf die Funktionsfähigkeit der Bremskraftverteilung keine allzu bedeutende Rolle.

Ein weiterer möglicher Fehlerzustand ist ein Fehlverhalten des aus Sicherheitsgründen die Stromversorgung der Stellglieder steuernden Relais oder Halbleiterelementes. Kann die Stromversorgung nicht mehr unterbrochen werden, ist dies zwar ein Systemfehler, auf den der Fahrer durch das Ansteuern der Warnlampe hinzuweisen ist, die Funktionsfähigkeit des Antiblockierschutzreglers und des Bremskraftverteilungsreglers wird jedoch nicht beeinträchtigt. Bei einem derartigen Fehler werden diese Funktionen daher weiter aktiv betrieben.

Entsprechendes gilt im Fehlerfall bei Fehlern am Handbremsschalter oder an weiteren, nur zur Funktionsverbesserung verwendeter Komponenten oder Signalen.

Bei Unterspannung im Bordnetz wird der Bremskraftverteilungsreglers weiterhin im Gegensatz zum Antiblockierschutzregler aktiv betrieben.

Wird ein interner Fehler im Steuergerät, das heißt ein Fehler des Mikrocomputers oder der Ein- und Ausgangsbausteine erkannt, so kann ein sicherer Betrieb des Bremssystems nicht mehr gewährleistet werden. In diesem Fall sind daher beide Regler abzuschalten.

Die vorstehend beschriebene erfindungsgemäße Vorgehensweise ist in den folgenden Flußdiagrammen der Figuren 2a und 2b dargestellt.

Der in den Figuren 2a und 2b dargestellte Programmteil wird eingeleitet, wenn von der Fehlerermittlungseinheit 24 wenigstens ein Fehler im Bremssystem erkannt wurde. Nach Start des Programmteils wird im ersten Schritt 100 abgefragt, ob die Fehlerermittlungseinheit 24 einen internen Fehler des Bremssystems, das heißt beispielsweise einen Fehler im Bereich der Mikrocomputer, der Ein-/Ausgabe-Einheiten, einen Stromausfall, etc. festgestellt hat. Ist dies der Fall, so wird gemäß Schritt 102 sowohl der Antiblockierschutzregler (ABS) als auch der Bremsverteilungsregler (EBV) abgeschaltet. Eine Fortführung der Funktionen bei derartigen internen Fehlern würde möglicherweise zu ungewollten Betriebssituationen führen. Nach Schritt 102 wird die Warnlampe angesteuert (103) und der Programmteil beendet.

Liegt kein interner Fehler gemäß Schritt 100 vor, so wird in einen Programmteil verzweigt, welcher abhängig von den ermittelten Fehlern den Notlauf des Antiblockierschutzreglers festlegt.

Im ersten Abfrageschritt 104 wird überprüft, ob die Fehlerermittlungseinheit wenigstens einen Fehler im Bremskraftreduzierungspfad, beispielsweise bei hydraulischen Bremsanlagen also bei Fehlern an der Rückförderpumpe oder an wenigstens einem Auslaßventil, oder eine Unterspannung erkannt hat. In diesem Fall wird gemäß Schritt 106 der Antiblockierschutzregler passiv geschaltet und die Warnlampe aktiviert. Nach Schritt 106 wird mit dem Programmteil zur Ermittlung des Notlaufes des Bremskraftverteilungsreglers gemäß Figur 2b fortgefahren.

Wurde in Schritt 104 festgestellt, daß keiner der genannten Fehler aufgetreten ist, wird im darauffolgenden Abfrageschritt 108 übeprüft, ob ein Fehler an einem der Radgeschwindigkeitssensoren festgestellt wurde. Ist dies der Fall, folgt im Schritt 110 die Abfrage, ob der Fehler an einem Hinterrad des Fahrzeugs aufgetreten ist. Wenn ja, wird gemäß Schritt 112 die Funktion des Antiblockierschutzreglers beibehalten, wobei das vom Defekt betroffene Hinterrad entsprechend dem Raddrehzahlsignal des vom Defekt nicht betroffenen Hinterrads geregelt wird und eine Auswertung des fehlerhaften Signals unterdrückt wird. Ferner wird im Fehlerfall die Warnlampe angesteuert. Daraufhin wird im Schritt 114 überprüft, ob der Defekt an einem Vorderradgeschwindigkeitssensor vorlag. Ist dies der Fall, wird gemäß Schritt 116 der Antiblockierschutzregler aufrechterhalten, das Raddrehzahlsignal des vom Defekt betroffenen Vorderrads durch das Signal der geschätzten Referenzgeschwindigkeit Vref ersetzt und die Warnlampe angesteuert. Die Referenzgeschwindigkeit wird dabei nur auf der Basis der vom Defekt nicht betroffenen Drehzahlsignalen gebildet. Diese Maßnahme dient dazu, daß an dem betroffenen Vorderrad ungemindert Bremskraft aufgebaut werden kann. Danach wie nach Schritt 114 wird im Schritt 118 überprüft, ob der ermittelte Defekt zur Folge hat, daß eines der Einlaßventile der Vorderräder nicht ansteuerbar ist. Ist dies der Fall, so wird gemäß Schritt 120 der Antiblockierschutzregler teilweise aufrechterhalten, wobei der Reglerteil, der das vom Defekt betroffene Vorderrad regeln sollte, abgeschaltet wird. Dies führt zwar zu einer Funktionsbeeinträchtigung des Antiblockierschutzreglers, da jedoch das verbleibende Vorderrad vom Antiblockierschutzregler am Blockieren gehindert wird, wird eine gegenüber der totalen Abschaltung erhebliche Verbesserung der Stabilität des Fahrzeugs beim Bremsvorgang erreicht. Ferner wird in Schritt 120 die Warnlampe angesteuert. Nach Schritt 118 im Falle einer negativen Entscheidung sowie nach Schritt 120 wird im Schritt 122 bei allen anderen vorliegenden Fehlern, beispielsweise eines Klebens des Ventilrelais, eines Defekts des Bremslichtschalters, etc. der Antiblockierschutzregler uneingeschränkt aufrechterhalten, solange die Nachteile einer Funktionseinschränkung durch die Vorteile einer erhöhten Verfügbarkeit überwogen werden.

Dabei ist zu bemerken, daß bei einem Defekt der Geschwindigkeitssensoren an allen Rädern einer Achse, bei einem Defekt eines Stellgliedes an der Vorderachse, der zu einem fehlenden Bremskraftaufbau sowie bei einem Defekt eines Stellgliedes, der zum ungeminderten Bremskraftaufbau an beiden Hinterradbremsen führt, dies als interner Fehler gewertet wird und der Antiblockierschutzregler und der EBV-Regler gemäß Programmschritt 102 passiv geschaltet wird. In diesem Sinne gilt die vorstehende Vorgehensweise nur in Bezug auf Einzelfehler, nicht bei Doppel- oder Mehrfachfehlern.

Nach Überprüfen des Notlaufs des Antiblockierschutzreglers im Fehlerfall wird nach Schritt 122 bzw. Schritt 106 mit dem in Figur 2b dargestellten Programmteil zur Ermittlung des Notlaufes des Bremskraftverteilungsreglers fortgefahren.

Dabei wird für hydraulische Bremsanlagen im Schritt 124 überprüft, ob ein Fehler der Rückförderpumpe vorliegt. Ist dies der Fall, so wird gemäß Schritt 126 der Bremskraftverteilungsregler aufrechterhalten, mit der Ergänzung, daß zum Druckabbau nach Beendigung der Bremspedalbetätigung durch den Fahrer die Auslaßventile der Radbremsen kurzzeitig angesteuert werden. Durch diese Maßnahme kann bei einer erneuten Bremskraftverteilungsregelung nicht nur eine Begrenzung des Hinterradbremsdrucks, sondern auch Druckabbau an den Hinterradbremsen durchgeführt werden, auch wenn die Rückförderpumpe defekt ist.

Nach Schritt 126 bzw. Schritt 124 wird im Abfrageschritt 128 überprüft, ob ein Drehzahlfühlerdefekt an einem Hinterrad vorliegt. Ist dies der Fall, wird gemäß Schritt 130 analog zu Schritt 116 der Bremskraftverteilungsregler fortgeführt, wobei für die Regelung nur das von einem korrekt arbeitenden Geschwindigkeitssensor eines Hinterrads abgegebenen Signal zur Regelung als Eingangsgröße verwendet wird. Liegt kein Sensorfehler an einem Hinterrad vor, so wird gemäß Schritt 132 überprüft, ob ein Fehler an einem Vorderradgeschwindigkeitssensor vorliegt. Ist dies der Fall, wird der EBV-Regler gemäß Schritt 133 analog zum ABS-Regler auf der Basis des fehlerfreien Vorraddrehzahlsignals berechnet. Nach Schritt 132 bei negativer Entscheidung wird bei allen anderen Fehlern, wie z.B. Fehler der Stellglieder an den Vor- oder Hinterachsbremsen, bei Unterspannung, bei einem Defekt des Bremslichtschalters oder des Ventilrelais, der Bremskraftverteilungsregler unbeeinflußt aufrechterhalten (Schritt 134), soweit diese Fehler nicht als interne Fehler gewertet werden gemäß Programmschritt 100. Dabei ist zu bemerken, daß bei einem Defekt eines Hinterradstellgliedes, der zu einem fehlenden Bresmkraftaufbau an eine Hinterradbremse führt, sich die Bremsleistung verschlechtern kann, ein Gewinn an Seitenführung jedoch dieser Verschlechterung gegenübersteht. Nach den Schritten 133 bzw. 134 sowie 102 wird der Programmteil beendet und zu gegebener Zeit wiederholt.

Zusammenfassend ist festzustellen, daß die erfindungsgemäße Vorgehensweise die Verfügbarkeit von Bremskraftverteilungsregler wesentlich erhöht, da nur in den Fällen, in denen eine Passivschaltung aus Sicherheitsgründen unbedingt notwendig ist, die Regler abgeschaltet werden. In allen anderen Fällen werden die Reglerfunktionen weitergeführt, wobei Funktionsbeeinträchtigungen in Kauf genommen werden, die jedoch durch die verbleibende stabilisierende Wirkung der Reglerfunktionen mehr als kompensiert werden.

Ferner ist darauf hinzuweisen, daß bei Auftreten von mehreren verschiedenartigen Fehlern die entsprechenden Maßnahmen gleichzeitig angewendet werden.

Im bevorzugten Ausführungsbeispiel wird ein EBV-Regler wie im eingangsgenannten Stand der Technik beschrieben eingesetzt, der die Differenz der Drehzahl des langsamsten Hinterrads und des schnellsten Vorderrads mit einem vorgegebenen Wert vergleicht und die Hinterachsbremskraft derart einstellt, daß die vorgegebene Differenz nicht überschritten wird.

In anderen Ausführungsbeispielen wird die erfindungsgemäße Vorgehensweise mit den obengenannten Vorteilen auch in Verbindung mit anderen EBV-Reglern eingesetzt. Beispielsweise kann ein EBV-Regler vorgesehen sein, der die Achslasten erfaßt und abhängig von den erfaßten Achslastwerten einen Sollverzögerungs- oder Solldruckwerte ermittelt.

Eine Deaktivierung der ABS- und der EBV-Regelung findet also nur dann statt, wenn Fehler vorliegen, die zu einer sicherheitskritischen Verschlechterung der Bremswirkung, der Bremsstabilität und/oder der Lenkfähigkeit, führen können, wie Fehler innerhalb der Steuereinheit, der Stellglieder zur Beeinflussung der Bremskraft und/oder der Spannungsversorgung, während bei Einzelfehler, die zu keiner sicherheitskritischen Verschlechterung der Bremswirkung, der Bremsstabilität und/oder der Lenkfähigkeit führen, der Antiblockierschutzregler zumindest in eingeschränkten Umfang aktiv bleibt.

Im bevorzugten Ausführungsbeispiel wird die erfindungsgemäße Vorgehensweise im Rahmen einer hydraulischen Bremsanlage angewendet. In anderen vorteilhaften Ausführungsbeispielen hat sich die erfindungsgemäße Vorgehensweise auch bei elektrohydraulischen, elektromechanischen, pneumatischen und elektropneumatischen Bremsanlagen mit ABS-Funktion und elektronischer Bremskraftverteilung als geeignet erwiesen.

## Patentansprüche

1. Bremssystem für ein Kraftfahrzeug,
- mit wenigstens einer elektronischen Steuereinheit (10), die wenigstens einen Regler (22) zur elektronischen Bremskraftverteilung zwischen Hinter- und Vorderachsbremsen sowie eine Fehlerermittlungseinheit (24) umfaßt,
**dadurch gekennzeichnet, daß**
- die Fehlerermittlungseinheit (24) Fehler innerhalb der elektronischen Steuereinheit (10) sowie in Komponenten und Zuleitungen (26 bis 62) außerhalb der elektronischen Steuereinheit (10) und in der Spannungsversorgung (46, 48) der Steuereinheit (10) erkennt, wobei
- die Fehlerermittlungseinheit (24) den auftretenden Fehler lokalisiert und entscheidet, ob der Bremskraftverteilungsregler (22) trotz des Fehlers weitergeführt wird,
- wobei bei Fehlern, die zu einer sicherheitskritischen Verschlechterung der Bremswirkung, der Bremsstabilität und/oder der Lenkfähigkeit führen können, der Bremskraftverteilungsregler (22) abgeschattet wird,
- wobei bei Einzelfehlem, die zu keiner sicherheitskritischen Verschlechterung der Bremswirkung, der Bremsstabilität und/oder der Lenkfähigkeit führen, der Bremskraftverteilungsregier (22) zumindest in eingeschränktem Umfang aktiv bleibt,
- wobei zu den Fehlern, bei denen der Bremskraftverteilungsregler (22) abgeschaltet wird, interne Fehler der elektronischen Steuereinheit (10) gehören.

2. Bremssystem nach Anspruch 1, **dadurch gekennzeichnet, daß** der Bremskraftverteilungsregler bei einem Defekt eines Geschwindigkeitssensors an einem Hinterrad auf der Basis eines Ersatzsignals weitergeführt wird.

3. Bremssystem nach Anspruch 2, **dadurch gekennzeichnet, daß** das Ersatzsignal das Geschwindigkeitssignal eines funktionstüchtigen Geschwindigkeitssensors ist.

4. Bremssystem nach Anspruch 1, **dadurch gekennzeichnet, daß** der Bremskraftverteilungsregler bei einem Defekt an einem Geschwindigkeitssensor eines Vorderrads auf der Basis eines Ersatzsignals weitergeführt wird.

5. Bremssystem nach Anspruch 4, **dadurch gekennzeichnet, daß** das Ersatzsignal die geschätzte Fahrgeschwindigkeit ist, wobei diese auf der Basis der Signale der funktionstüchtigen Geschwindigkeitssensoren des Kraftfahrzeugs bestimmt wird.

6. Bremssystem nach Anspruch 1, **dadurch gekennzeichnet, daß** der Bremskraftverteilungsregier bei Ausfall aller Geschwindigkeitssensoren einer Achse, bei Defekten an einem Stellglied an der Vorderachse, die zu einem fehlenden Bremskraftaufbau an einer Vorderradbremse führen sowie bei Defekten an wenigstens einem Stellglied, die zum ungeminderten Bremskraftaufbau an den Bremsen beider Hinterräder führt passiv geschaltet wird.

7. Bremssystem nach Anspruch 1, **dadurch gekennzeichnet, daß** bei Defekten an einem Stellglied, die zu einem ungeminderten Bremskraftaufbau an einem Vorderrad führen, der Bremskraftverteilungsregler ungeachtet des Defekts weiter aktiv bleibt

8. Bremssystem nach einem der Ansprüche 1 bis 7, **dadurch gekennzeichnet, daß** der Bremskraftverteilungsregler in einer hydraulischen Bremsanlage bei einem Fehler der Rückförderpumpe aktiv bleibt wobei bei Druckabbauansteuerungen das entsprechende Auslaßventil am Ende der Bremskraftverteilungsregelung geöffnet wird, solange das Bremspedal nicht betätigt ist

9. Bremssystem nach einem der Ansprüche 1 bis 8, **dadurch gekennzeichnet, daß** bei Fehlern an den Stellgliedern an den Vorderradbremsen oder an den Hinterradbremsen, die zu einer fehlenden Möglichkeit einer Bremskraftreduzierung führen, oder bei Unterspannung der Bremskraftverteilungsregler aktiv bleibt

10. Bremssystem nach einem der vorhergehenden Ansprüche, daß zur Bremskraftverteilungsregelung zwischen Vorder- und Hinterachse der Hinterachsbremskraft derart eingestellt wird, daß die Differenz zwischen dem langsamsten Hinterrad und dem schnellsten Vorderrad einen vorgegebenen Wert nicht überschreitet.

## Claims

1. Brake system for a motor vehicle
- with at least one electronic control unit (10), which comprises at least one controller (22) for electronic braking-power distribution between rear- and front-axle brakes and one fault detection unit (24),
**characterized in that**
- the fault detection unit (24) detects faults within the electronic control unit (10) and in components and feed lines (26 to 62) outside the electronic control unit (10) and in the voltage supply (46, 48) of the control unit (10),
- the fault detection unit (24) localizing the fault which occurs and deciding whether the braking-power distribution controller (22) will continue to be operated despite the fault,
- the braking-power distribution controller (22) being switched off in the case of faults which can lead to a safety-critical impairment of the braking effect, braking stability and/or steerability,
- the braking-power distribution controller (22) remaining active, at least to a limited extent, in the case of individual faults which do not lead to a safety-critical impairment of the braking effect, braking stability and/or steerability,
- the faults in the case of which the braking-power distribution controller (22) is switched off including internal faults in the electronic control unit (10).

2. Brake system according to Claim 1, **characterized in that**, in the case of a defect in a speed sensor at a rear wheel, the braking-power distribution controller continues to be operated on the basis of a substitute signal.

3. Brake system according to Claim 2, **characterized in that** the substitute signal is the speed signal of a functional speed sensor.

4. Brake system according to Claim 1, **characterized in that**, in the case of a defect in a speed sensor of a front wheel, the braking-power distribution controller continues to be operated on the basis of a substitute signal.

5. Brake system according to Claim 4, **characterized in that** the substitute signal is the estimated travelling speed, this being determined on the basis of the signals of the functional speed sensors of the motor vehicle.

6. Brake system according to Claim 1, **characterized in that** the braking-power distribution controller is switched to a passive state if all the speed sensors on one axle fail, in the case of defects in an actuator at the front axle which lead to a faulty braking-power build-up at a front-wheel brake and in the case of defects in at least one actuator leading to an undiminished braking-power build-up at the brakes of both rear wheels.

7. Brake system according to Claim 1, **characterized in that**, in the case of defects in an actuator which lead to an undiminished braking-power build-up at a front wheel, the braking-power distribution controller remains active irrespective of the defect.

8. Brake system according to one of Claims 1 to 7, **characterized in that** the braking-power distribution controller in a hydraulic brake system remains active in the case of a fault in the return pump, and, in the case of pressure reduction commands, the corresponding outlet valve is opened at the end of the braking-power distribution control operation as long as the brake pedal is not actuated.

9. Brake system according to one of Claims 1 to 8, **characterized in that** the braking-power distribution controller remains active in the case of faults in the actuators at the front-wheel brakes or at the rear-wheel brakes which lead to the impossibility of a braking-power reduction or in the case of undervoltage.

10. Brake system according to one of the preceding claims, **characterized in that**, for control of the braking-power distribution between the front and the rear axle, the rear-axle braking power is set in such a way that the difference between the slowest rear wheel and the fastest front wheel does not exceed a specified value.

## Revendications

1. Système de freinage pour véhicule automobile comprenant :
- au moins une unité de commande électronique (10) ayant au moins un régulateur (22) pour la répartition électronique de la force de freinage entre les freins de roues de l'essieu arrière et de l'essieu avant et une unité de détection de défaut (24),
**caractérisé en ce que**
- l'unité de détermination de défaut (24) décèle les défauts dans l'unité de commande électronique (10) et dans les composants et lignes (26-62) à l'extérieur de l'unité de commande électronique (10) ainsi que dans l'alimentation en tension (46, 48) de l'unité de commande (10),
- l'unité de détection de défaut (24) localise le défaut et décide si le régulateur de répartition de force de freinage (22) doit continuer de fonctionner malgré le défaut,
- pour les défauts qui risquent de conduire à une détérioration critique pour la sécurité de l'effet de freinage, de la stabilité de freinage et/ou de la conduite, on coupe le régulateur de force de freinage (22),
- pour les défauts isolés qui n'aboutissent pas à une détérioration critique pour la sécurité de l'effet de freinage, de la stabilité de freinage et/ou de la conduite, on maintient actif au moins de manière limitée le régulateur de répartition de force de freinage (22),
- les défauts pour lesquels on coupe le régulateur de répartition de force de freinage (22) comprennent des défauts internes de l'unité de commande électronique (10).

2. Système de freinage selon la revendication 1,
**caractérisé en ce que**
le régulateur de répartition de force de freinage continue de fonctionner en utilisant un substitut de signal si un capteur de vitesse d'une roue arrière est défectueux.

3. Système de freinage selon la revendication 2,
**caractérisé en ce que**
le substitut de signal est le signal de vitesse d'un capteur de vitesse fonctionnant correctement.

4. Système de freinage selon la revendications 1,
**caractérisé en ce que**
le régulateur de répartition de force de freinage continue de fonctionner en utilisant un substitut de signal en cas de défaut d'un capteur de vitesse d'une roue avant.

5. Système de freinage selon la revendication 4,
**caractérisé en ce que**
le substitut de signal est un signal de vitesse de déplacement, évalué, cette vitesse étant définie à partir des signaux des capteurs de vitesse fonctionnant correctement du véhicule automobile.

6. Système de freinage selon la revendication 1,
**caractérisé en ce que**
le régulateur de répartition de force de freinage est neutralisé en cas de défaillance de tous les capteurs de vitesse d'un essieu, en cas de défaut d'un actionneur de l'essieu avant conduisant à l'établissement d'une force de freinage défectueuse d'un frein de roue avant, ainsi qu'en cas de défaut d'au moins un actionneur conduisant à l'établissement d'une force de freinage non réduite au niveau des freins des deux roues arrière.

7. Système de freinage selon la revendication 1,
**caractérisé en ce qu'**
en cas de défaut d'un actionneur conduisant à l'établissement d'une force de freinage non réduite au niveau d'une roue avant, on laisse fonctionner le régulateur de répartition de force de freinage sans tenir compte du défaut.

8. Système de freinage selon l'une des revendications 1 à 7,
**caractérisé en ce que**
le régulateur de répartition de force de freinage d'une installation de freinage hydraulique reste actif en cas de défaut de la pompe de refoulement et, pour les commandes de diminution de pression on ouvre la soupape de sortie correspondante à la fin de la régulation de la répartition de la force de freinage aussi longtemps que la pédale de frein n'est pas actionnée.

9. Système de freinage selon l'une des revendications 1 à 8,
**caractérisé en ce qu'**
en cas de défaut des actionneurs des freins de roues avant ou des freins de roues arrière conduisant à une erreur possible de réduction de la force de freinage, ou en cas de sous-tension, on maintient en activité le régulateur de répartition de force de freinage.

10. Système de freinage selon l'une des revendications précédentes,
**caractérisé en ce que**
pour réguler la répartition de la force de freinage entre l'essieu avant et l'essieu arrière, on règle la force de freinage de l'essieu arrière pour que la différence entre la roue arrière la plus lente et la roue avant la plus rapide ne dépasse pas une valeur prédéterminée.
